# EUROPEAN PATENT SPECIFICATION

(11) **EP 3 393 396 B1**
(45) Date of publication and mention of the grant of the patent: **14.02.2024**
(21) Application number: 16822992.0
(22) Date of filing: 21.12.2016
(51) Int. Cl.: A61C 13/00

(54) **METHOD FOR DESIGNING A RESTORATION AND A REDUCTION COPING**
VERFAHREN ZUM ENTWURF EINER RESTAURATION UND EINER REDUKTIONSKAPPE
PROCÉDÉ DE CONCEPTION D'UNE RESTAURATION ET D'UNE COIFFE DE RÉDUCTION

(30) Priority: 21.12.2015 DK 201570842
(43) Date of publication of application: 31.10.2018
(73) Proprietor: 3Shape A/S, 1060 Copenhagen K (DK)
(72) Inventor: FISKER, Rune, 2830 Virum (DK)
(74) Representative: Guardian IP Consulting I/S
(86) International application number: PCT/EP2016/082127
(87) International publication number: WO 2017/108919

(56) References cited:
- US-A1- 2008 220 395
- US-A1- 2012 143 364
- US-A1- 2014 004 071
- US-A1- 2014 342 302
- US-A1- 2015 056 576

## Description

### Field of the invention

This invention generally relates to digitally designing a reduction coping for guiding dental milling tools during preparation of one or more teeth of a patient. More particularly, the invention relates to providing a reduction coping and a restoration in one design phase in order to reduce design time and patient sittings.

### Background of the invention

Reduction copings are used to correct preparations that have not been prepared sufficiently in order to obtain required minimum thickness for the specific restoration.

A preparation, or prep for short, is the term used for a tooth that has been ground (prepared) by a dentist in order to receive a restoration.

In such cases a restoration coping is formed and used as a guide for the dentist to further grind the preparations in order to obtain a desired shape and allow for a restoration to be placed on the preparation that fulfills the minimum thickness requirements.

Minimum thickness requirement refers to the material thickness of the restorations that is required to prevent malfunction, in particular breakage, of the restoration. The minimum thickness will typically vary depending on the type of material used, but may also change depending on the type of restoration, anatomy and many other factors.

The restoration coping is typically formed as a sleeve that is placed around the preparation, where a part of the preparation extends through the reduction coping. The edge (antagonist facing surface) of the reduction coping functions as a guiding surface for the dentist whereon he can guide his tools and thereby remove the part of the preparation that extends through the reduction coping.

Providing reduction copings are well known in the art. For example in patent application US 2015/056576 it is disclosed using CAD processes to generate a reduction coping model.

Today when using a reduction coping a subsequent impression is taken either manually or digitally in order to design the restoration based on the reduced preparation. This has the disadvantage that the patient needs to revisit the patient for the reduction and the additional impression.

In the following there will be taught a method and workflow wherein a CAD workflow can be used to digitally design the reduction coping and digitally modify the preparation between patient visits and thereby reduce the number of patient visits compared to methods and workflows previously used.

### Summary

The invention is as defined in the appended claims.

Disclosed is a method for digitally designing a digital restoration design and a digital reduction coping design, the method comprises
- receiving one order from a user for a restoration and a reduction coping,
- obtaining a digital restoration design and a digital reduction coping design taken during one patient sitting,
- operating a computer aided manufacturing system for manufacturing a restoration based on the digital restoration design and manufacturing a reduction coping based on the digital reduction coping design,
- shipping the restoration and the reduction coping to the user wherein the digital restoration design and the digital reduction coping design is obtained by operating a computer aided design system for designing the digital restoration design and the digital reduction coping design wherein operating the computer aided design system comprises:
   obtaining a digital 3D representation of the upper jaw and the lower jaw of the patient taken during one patient sitting, said digital 3D representation comprises a digital 3D preparation representing at least one preparation targeted for receiving a restoration;
   digitally determining a reduction surface intersecting the digital 3D preparation representing the at least one preparation, said reduction surface comprises a digital cutting surface for cutting the digital 3D preparation representing the at least one preparation and the reduction surface is arranged at a distance from a tooth that is antagonist to the at least one preparation in order to meet a minimum thickness requirement for the digital restoration design; $
   digitally modifying the digital 3D representation representing the at least one preparation by digitally cutting, based on the digital cutting surface, the digital 3D preparation to create a modified digital 3D representation of the at least one preparation comprising the reduction surface; and $
   digitally designing both the digital restoration design and the digital reduction coping design based at least on the reduction surface, the digital 3D preparation and modified digital 3D representation of the at least one preparation comprising the reduction surface after only the one patient sitting.

By using the reduction surface for both designing the reduction coping and the restoration, the restoration can be provided simultaneously with the reduction coping and in the end placed in the mouth of the patient directly after the dentist has reduced the preparation using the reduction coping.

In particular since the reduction surface represents an expected cutting surface for the prep (or in some cases an offset therefrom) it is a very good estimate to expect that a part of the expected shape of the final prep will follow the shape and position of the reduction surface.

Accordingly, it is not necessary to obtain an additional impression since the knowledge obtained from designing the reduction coping is also used to design the restoration which further removes the need of an additional patient visit since the reduction of the preparation and the placement of the restoration can be done in one visit.

This saves time and money for the dentist and consequently also for the patient.

The reduction surface can advantageously be visualized together with the digital 3D representation in a digital design environment displayed on a computer monitor.

The placement of the reduction surface can be done based on parameters determining the minimum thickness requirement. It can also be an option to allow the user to move the reduction surface in case the user prefer, an even thicker digital restoration design or the reduction surface may also be rotated according to the users preferences.

In addition, a visual indication showing how close the reduction surface is to the minimum thickness requirement may also be provided, for example a visual scale moving from light green where there is more than 2mm to the minimum thickness requirement to dark red when there is less than 0,2mm to the minimum thickness requirement.

In one embodiment the method further comprises
- digitally modifying the digital 3D representation by cutting the digital 3D representation along the reduction surface; and
- digitally designing the digital restoration design and the digital reduction coping design based on the modified digital 3D representation.

By modifying the digital 3D representation the user is given a visual representation of the expected shape of the digital 3D preparation after the preparation has been reduced. As mentioned, unless the dentist deviates from use of the reduction coping this expected shape will be very reliable since the actual shape will be provided by the reduction coping which is designed based on the same modification.

In one embodiment the reduction surface is a plane. By using a plane as a reduction surface the manufactured reduction coping is provided with a design, which in an easy and a reliable way guides the movement of the tools of the dentist in a straight path. Accordingly, this reduces the risk of any errors during the actual physical reduction/grinding of the preparation.

The reduction surface may advantageously be used as a base for designing the reduction coping and/or the restoration to reduce the risk of design errors.

Accordingly, in one embodiment the digital reduction coping design applies at least a part of the reduction surface as an antagonist facing surface of the reduction coping and in another or additional embodiment at least a part of the preparation facing surface of the digital restoration design is designed based on an offset of the reduction surface.

It should be understood that when using the reduction surface as base for a design, in particular a digital restoration design, different consideration should be made. For example offsets of the reduction surface can be used for providing e.g. cement gaps and layered restorations, such as copings with veneers. Drill compensation should also be considered when designing restorations that are to be milled.

In an another aspect disclosed herein, although not part of the invention, there is disclosed a method for providing a restoration and a reduction coping, comprising
- receiving one order from a user for a restoration and a reduction coping,
- obtaining a digital restoration design and a digital reduction coping design,
- operating a computer aided manufacturing system for manufacturing a restoration based on the digital restoration design and manufacturing a reduction coping based on the digital reduction coping design,
- shipping the restoration and the reduction coping to the user.

It is an advantage that the dentist only needs to generate one order for both the reduction coping and the restoration, since this saves time.

In particular as disclosed herein it is possible to generate one order since the reduction coping and restoration is designed during the same design workflow.

Accordingly, in one embodiment the digital restoration design and the digital reduction coping design is obtained by operating a computer aided design system for designing the digital restoration design and the digital reduction coping design.

In particular, the computer aided design system advantageously comprises a method for designing a digital restoration design and a digital reduction coping design according to any of the method steps previously discussed.

Since the reduction coping and the restoration are ordered in one order and designed in one workflow, then in one embodiment the restoration and the reduction coping can advantageously be shipped in one package.

In one aspect, there is disclosed a method for manufacturing a restoration and a reduction coping, wherein the method comprises the steps of digitally designing a digital restoration design and a digital reduction coping design as disclosed above, and manufacturing the digital restoration design and the digital reduction coping design using computer aided manufacturing (CAM).

Such CAM manufacturing techniques can for example be additive manufacturing, such as printing, or subtractive manufacturing such as milling. These manufacturing processes are well known in the art.

In another aspect, there is disclosed a digital design environment for digitally designing a digital restoration design and a digital reduction coping design, comprising:
- a digital workspace for presenting a digital 3D representation of the upper jaw and the lower jaw of the patient, said digital 3D representation comprises a digital 3D preparation representing at least one preparation targeted for receiving a restoration;
- a digital preparation cutting tool for digitally determining a reduction surface intersecting the digital 3D preparation, said reduction surface arranged in order to meet a minimum thickness requirement for the digital restoration design; and
- at least one digital design tool for digitally designing the digital restoration design and the digital reduction coping design based at least on the reduction surface and the digital 3D preparation.

In one embodiment the digital design environment is established by executing software on a computer processor. When executed the digital design environment established a digital workspace which is visually presented on a monitor that is connected to the computer processor. In order to manipulate elements in the digital workspace, such as the digital 3D representations discussed above, input devices such as a keyboard, mouse and/or touch interface on the monitor is connected to the computer processor.

The input devices also allows the user to control different digital tools, such as the digital preparation cutting tool and at least one digital design tool discussed above. These tools will typically also be visually presented in the digital workspace from where the user can activate them.

### Brief description of the drawings

The above and/or additional objects, features and advantages of the present invention, will be further elucidated by the following illustrative and nonlimiting detailed description of embodiments of the present invention, with reference to the appended figures, wherein:
Fig. 1 shows schematically a workflow for using a reduction coping as previously done in the prior art,
Fig. 2 shows schematically a workflow for using a reduction coping as disclosed herein, and
Fig. 3-6 illustrates the general steps of one embodiment of a method as disclosed herein.

### Detailed description

In the following description, reference is made to the accompanying figures, which show by way of illustration how the invention may be practiced.

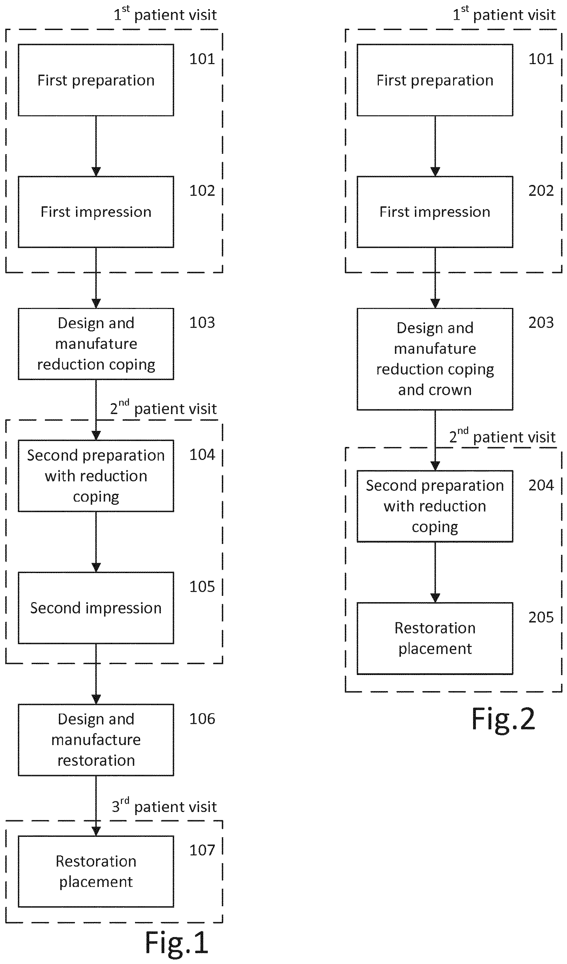

As disclosed in prior art a reduction coping is used to further prepare a preparation in order to be able to properly support a restoration designed to apply proper minimal thickness. As shown in figure 1, such a workflow, as known in the art, consists of seven general steps 101 - 107.

In step 101 the dentist prepares the tooth by grinding away tooth material to form a so-called preparation (prep) on which the restoration is planned to be placed.

When the dentist is done he takes an impression of the oral situation and specifically the prep in step 102. This can be done manually or digitally, e.g. by using an intra-oral scanner.

Step 101 and 102 requires that the patient is present in a first visit or sitting.

Based on the impression the restoration design is initiated, either by a lab or in some cases the dentist him/herself. However, in the current situation it is recognized that the tooth is not properly prepared and it is necessary to further grind the prep in order to satisfy the minimum thickness required for the desired restoration, which for example can be a crown.

In order to correctly prepare the tooth and remove sufficient material to support the restoration a reduction coping is designed and manufactured in step 103.

The reduction coping is then used by the dentist in step 104 to reduce the preparation to the correct height. Subsequently the dentist takes a new impression of the oral situation, in particular the correctly prepped tooth in step 105.

In order to execute steps 104 and 105 it is necessary to have a second patient visit or sitting.

With the prepared tooth correctly prepped the restoration can now be designed and manufactured in step 106 and the dentist can in step 107 place the restoration in the patient. Step 107 requires a third patient visit or sitting.

As can be understood by this workflow a number of three individual patient visits or sittings are required and two design phases are also involved. This requires considerable resources and thus, a reduction thereof would reduce both cost, time and patient satisfaction.

A method as disclosed herein will advantageously be able to provide a workflow as shown in figure 2.

As in the known work flow the dentist prepares the tooth in step 201 and subsequently takes and impression in step 202.

This requires a first patient visit or sitting.

At the lab it is determined that the preparation does not meet the minimum thickness requirement for the specific restoration requested by the dentist and thus, in step 203 a reduction coping is design and manufactured. In addition based on an expected shape of the preparation it is possible to also design and manufacture the restoration as disclosed herein.

The dentist subsequently further prepares the tooth to meet the minimum thickness requirements using the reduction coping in step 204 and immediately after in step 205 he can place the restoration on the prep.

Step 204 and 205 requires the patient to be present in a second visit or sitting.

As can be understood, the method as disclosed herein for designing a reduction coping and restoration enables a workflow that reduces the known workflow with one design phase and one patient visit or sitting - in practice reducing the workflow by one third. Even more, it is only necessary to take one impression.

This is in particular realized by using a reduction surface as described herein. Since the reduction surface enables a very good estimate of the expected shape of the final preparation, which can be used as basis for designing the restoration.

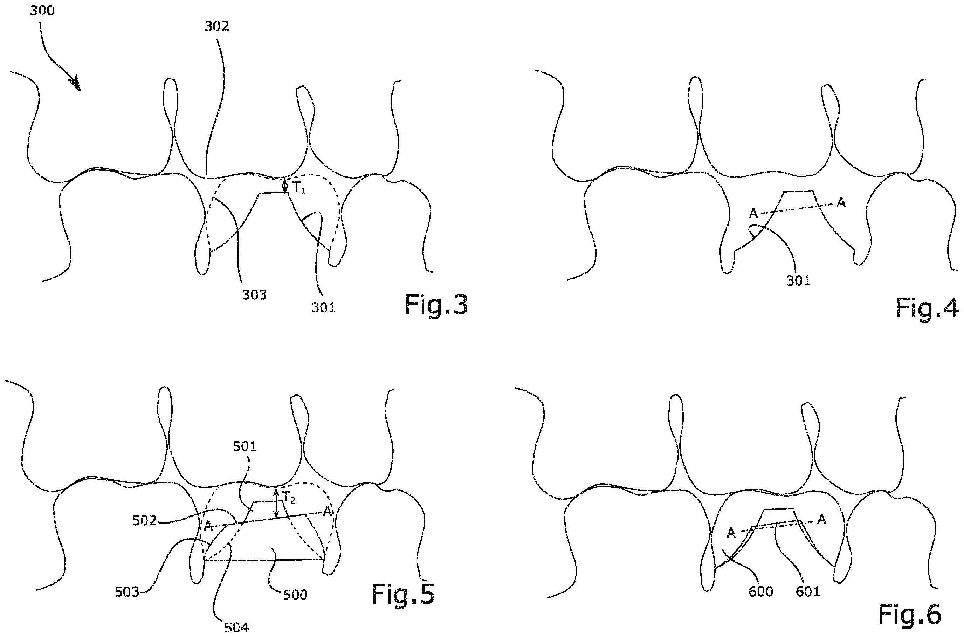

The method as disclosed herein is in one embodiment described in general steps in figures 3 - 6.

A digital 3D representation 300 of a patients oral situation including a digital 3D preparation 301 of a tooth prepared by a dentist is shown in figure 3.

The digital 3D antagonist 302, representing the antagonist tooth is also provided and when a desired digital restoration design 303 is designed it can be seen that the minimum thickness (T₁) of the restoration is lower than the minimum required thickness of the digital restoration design.

In order to meet the minimum required thickness a reduction surface A - A in the shape of a plane is placed, as shown in figure 4

Based on the reduction surface a digital reduction coping design 500 can now be designed as shown in figure 5, since the reduction surface cuts through the digital 3D preparation so that the distance (T₂) from the antagonist to the reduction surface meets the minimum required thickness.

The digital reduction coping design 500 is defined by a digital outer surface 503, a digital inner surface 504 facing the preparation and the antagonist facing surface 502.

The digital reduction coping extends annularly around the digital preparation, thereby encircling it. The protruding part 501 of the digital preparation represents the part of the preparation, which should be removed in order to enable a restoration to be placed which meet the minimum required thickness.

The reduction surface defines the plane wherein the antagonist facing surface 502 of the digital reduction coping is placed. When used, the antagonist facing surface of the physical reduction coping will function as a guide for the dentist's grinding tools ensuring that the preparation is ground along a surface identical to that represented by the reduction surface. Accordingly, the reduction surface A - A is a very exact estimate to use in estimating the final antagonist facing surface of the preparation, and thus the oral geometry of the patient after actual use of the reduction coping.

Thus, as can be seen in figure 6, the reduction surface A - A can be used as a reliable reference for designing the digital restoration design 600. In particular the reduction surface A - A can be used for designing the preparation facing surface 601 of the digital restoration design. In the current situation the preparation facing surface of digital restoration design is offset from the reduction surface in order to provide a cement gap for cementing the restoration to the preparation.

Although some embodiments have been described and shown in detail, the invention is not restricted to them, but may also be embodied in other ways within the scope of the subject matter defined in the following claims. In particular, it is to be understood that other embodiments may be utilised and structural and functional modifications may be made without departing from the scope of the present invention.

In device claims enumerating several means, several of these means can be embodied by one and the same item of hardware. The mere fact that certain measures are recited in mutually different dependent claims or described in different embodiments does not indicate that a combination of these measures cannot be used to advantage.

A claim may refer to any of the preceding claims, and "any" is understood to mean "any one or more" of the preceding claims.

The features of the method described above and in the following may be implemented in software and carried out on a data processing system or other processing means caused by the execution of computer-executable instructions. The instructions may be program code means loaded in a memory, such as a RAM, from a storage medium or from another computer via a computer network. Alternatively, the described features may be implemented by hardwired circuitry instead of software or in combination with software.

## Claims

1. A method for providing a restoration and a reduction coping for a preparation, comprising
receiving one order from a user for a restoration and a reduction coping,
obtaining a digital restoration design (303) and a digital reduction coping design (500) taken during one patient sitting,
operating a computer aided manufacturing system for manufacturing a restoration based on the digital restoration design (303) and manufacturing a reduction coping based on the digital reduction coping design (500),
shipping the restoration and the reduction coping to the user wherein the digital restoration design (303) and the digital reduction coping design (500) is obtained by operating a computer aided design system for designing the digital restoration design (303) and the digital reduction coping design (500) wherein operating the computer aided design system comprises:
obtaining a digital 3D representation of the upper jaw and the lower jaw of the patient (300) taken during one patient sitting, said digital 3D representation comprises a digital 3D preparation (301) representing at least one preparation targeted for receiving a restoration;
digitally determining a reduction surface (A - A) intersecting the digital 3D preparation (301) representing the at least one preparation, said reduction surface (A - A) comprises a digital cutting surface for cutting the digital 3D preparation (301) representing the at least one preparation and the reduction surface is arranged at a distance from a tooth that is antagonist to the at least one preparation in order to meet a minimum thickness requirement for the digital restoration design (303);
digitally modifying the digital 3D representation (301) representing the at least one preparation by digitally cutting, based on the digital cutting surface, the digital 3D preparation (301) to create a modified digital 3D representation of the at least one preparation comprising the reduction surface (A - A); and
digitally designing both the digital restoration design (303) and the digital reduction coping design (500) based at least on the reduction surface (A - A), the digital 3D preparation (301) and modified digital 3D representation of the at least one preparation comprising the reduction surface (A - A) after only the one patient sitting.

2. A method according to claim 1, wherein the reduction surface is a plane (A - A).

3. A method according to claim 2, wherein the digital reduction coping design (500) applies at least a part of the reduction surface (A - A) as an antagonist facing surface of the reduction coping (500).

4. A method according to claim 2 or 3, wherein at least a part of the preparation facing surface of the digital restoration design (303) is designed based on an offset of the reduction surface (500).

5. A method according to any of the preceding claims, the digital reduction coping design (500) and digital restoration design (303) are designed during same design workflow.

6. The method according to any of the preceding claims, wherein the digital restoration design (303) is designed before the preparation is further reduced based on the digitally designed reduction coping comprising the reduction surface.

7. A method according to claim 1, wherein the restoration and the reduction coping is shipped in one package.

8. A method for manufacturing a restoration and a reduction coping, wherein the method comprises the steps of digitally designing a digital restoration design (303) and a digital reduction coping design (500), and manufacturing the digital restoration design and the digital reduction coping design using computer aided manufacturing (CAM) wherein digitally designing the digital restoration design (303) and the digital reduction coping design comprises
obtaining a digital 3D representation of the upper jaw and the lower jaw of the patient (300) taken during one patient sitting, said digital 3D representation comprises a digital 3D preparation (301) representing at least one preparation targeted for receiving a restoration;
digitally determining a reduction surface (A - A) intersecting the digital 3D preparation (301) representing the at least one preparation, said reduction surface (A - A) comprises a digital cutting surface for cutting the digital 3D preparation (301) representing the at least one preparation and the reduction surface is arranged at a distance from a tooth that is antagonist to the at least one preparation in order to meet a minimum thickness requirement for the digital restoration design (303);
digitally modifying the digital 3D representation (301) representing the at least one preparation by digitally cutting, based on the digital cutting surface, the digital 3D preparation (301) to create a modified digital 3D representation of the at least one preparation comprising the reduction surface (A - A); and
digitally designing both the digital restoration design (303) and the digital reduction coping design (500) based at least on the reduction surface (A - A), the digital 3D preparation (301) and modified digital 3D representation of the at least one preparation comprising the reduction surface (A - A) after only the one patient sitting.

9. A digital design environment for digitally designing a digital restoration design (303) and a digital reduction coping design (500) for a preparation, comprising:
a digital workspace for presenting a digital 3D representation of the upper jaw and the lower jaw of the patient (300) taken during one patient sitting, said digital 3D representation comprises a digital 3D preparation (301) representing at least one preparation targeted for receiving a restoration;
a digital preparation cutting tool for digitally determining a reduction surface (A - A) intersecting the digital 3D preparation (301) representing the at least one preparation, said reduction surface (A - A) comprises a digital cutting surface for cutting the digital 3D preparation (301) representing the at least one preparation and the reduction surface is arranged at a distance from a tooth that is antagonist to the at least one preparation in order to meet a minimum thickness requirement for the digital restoration design (303); and
a digital modifying tool for digitally modifying the digital 3D representation (301) representing the at least one preparation by digitally cutting, based on the digital cutting surface, the digital 3D preparation (301) to create a modified digital 3D representation of the at least one preparation comprising the reduction surface (A - A); and
at least one digital design tool for digitally designing both the digital restoration design (303) and the digital reduction coping design (500) based at least on the reduction surface (A - A), the digital 3D preparation (301) and modified digital 3D representation of the at least one preparation comprising the reduction surface (A - A) after only the one patient sitting.

## Patentansprüche

1. Verfahren zum Bereitstellen eines Zahnersatzes und einer Reduktionskappe für eine Präparation, umfassend
Empfangen eines Auftrags von einem Benutzer für einen Zahnersatz und eine Reduktionskappe,
Erhalten eines digitalen Zahnersatzentwurfs (303) und eines digitalen Reduktionskappenentwurfs (500), die während einer Patientensitzung erstellt wurden,
Einsetzen eines computergestützten Fertigungssystems zum Anfertigen eines Zahnersatzes auf Grundlage des digitalen Zahnersatzentwurfs (303) und Anfertigen einer Reduktionskappe auf Grundlage des digitalen Reduktionskappenentwurfs (500),
Verschicken des Zahnersatzes und der Reduktionskappe an den Benutzer, wobei der digitale Zahnersatzentwurf (303) und der digitale Reduktionskappenentwurf (500) durch Einsetzen eines computergestützten Entwurfssystems zum Entwerfen des digitalen Zahnersatzentwurfs (303) und des digitalen Reduktionskappenentwurfs (500) erhalten werden, wobei das Einsetzen des computergestützten Entwurfssystems umfasst:
Erhalten einer digitalen 3D-Darstellung des Oberkiefers und des Unterkiefers des Patienten (300), die während einer Patientensitzung erstellt wurde, wobei die digitale 3D-Darstellung eine digitale 3D-Präparation (301) umfasst, die mindestens eine Präparation darstellt, die dafür vorgesehen ist, einen Zahnersatz aufzunehmen;
digitales Bestimmen einer Reduktionsfläche (A-A), die die digitale 3D-Präparation (301), die die mindestens eine Präparation darstellt, schneidet, wobei die Reduktionsfläche (A-A) eine digitale Schnittfläche zum Schneiden der digitalen 3D-Präparation (301), die die mindestens eine Präparation darstellt, umfasst und die Reduktionsfläche in einem Abstand von einem Zahn angeordnet ist, der Antagonist zu der mindestens einen Präparation ist, um eine Mindestdickenanforderung für den digitalen Zahnersatzentwurf (303) zu erfüllen;
digitales Modifizieren der digitalen 3D-Darstellung (301), die die mindestens eine Präparation darstellt, durch digitales Schneiden der digitalen 3D-Präparation (301) auf Grundlage der digitalen Schnittfläche, um eine modifizierte digitale 3D-Darstellung der mindestens einen Präparation zu erzeugen, die die Reduktionsfläche (A-A) umfasst; und
digitales Entwerfen sowohl des digitalen Zahnersatzentwurfs (303) als auch des digitalen Reduktionskappenentwurfs (500) auf Grundlage mindestens der Reduktionsfläche (A-A), der digitalen 3D-Präparation (301) und modifizierten digitalen 3D-Darstellung der mindestens einen Präparation, die die Reduktionsfläche (A-A) umfasst, nach nur der einen Patientensitzung.

2. Verfahren nach Anspruch 1, wobei die Reduktionsfläche eine Ebene (A-A) ist.

3. Verfahren nach Anspruch 2, wobei der digitale Reduktionskappenentwurf (500) mindestens einen Teil der Reduktionsfläche (A-A) als eine dem Agonisten zugewandte Fläche der Reduktionskappe (500) anwendet.

4. Verfahren nach Anspruch 2 oder 3, wobei mindestens ein Teil der der Präparation zugewandten Fläche des digitalen Zahnersatzentwurfs (303) auf Grundlage eines Versatzes der Reduktionsfläche (500) entworfen wird.

5. Verfahren nach einem der vorstehenden Ansprüche, wobei der digitale Reduktionskappenentwurf (500) und digitale Zahnersatzentwurf (303) während desselben Entwurfsarbeitsablaufs entworfen werden.

6. Verfahren nach einem der vorstehenden Ansprüche, wobei der digitale Zahnersatzentwurf (303) entworfen wird, bevor die Präparation auf Grundlage der digital entworfenen Reduktionskappe, die die Reduktionsfläche umfasst, weiter reduziert wird.

7. Verfahren nach Anspruch 1, wobei der Zahnersatz und die Reduktionskappe in einer Verpackung verschickt werden.

8. Verfahren zum Anfertigen eines Zahnersatzes und einer Reduktionskappe, wobei das Verfahren die Schritte des digitalen Entwerfens eines digitalen Zahnersatzentwurfs (303) und eines digitalen Reduktionskappenentwurfs (500) und des Anfertigens des digitalen Zahnersatzentwurfs und des digitalen Reduktionskappenentwurfs unter Verwendung von computergestützter Fertigung (CAM) umfasst, wobei das digitale Entwerfen des digitalen Zahnersatzentwurfs (303) und des digitalen Reduktionskappenentwurfs Folgendes umfasst:
Erhalten einer digitalen 3D-Darstellung des Oberkiefers und des Unterkiefers des Patienten (300), die während einer Patientensitzung erstellt wurde, wobei die digitale 3D-Darstellung eine digitale 3D-Präparation (301) umfasst, die mindestens eine Präparation darstellt, die dafür vorgesehen ist, einen Zahnersatz aufzunehmen;
digitales Bestimmen einer Reduktionsfläche (A-A), die die digitale 3D-Präparation (301), die die mindestens eine Präparation darstellt, schneidet, wobei die Reduktionsfläche (A-A) eine digitale Schnittfläche zum Schneiden der digitalen 3D-Präparation (301), die die mindestens eine Präparation darstellt, umfasst und die Reduktionsfläche in einem Abstand von einem Zahn angeordnet ist, der Antagonist zu der mindestens einen Präparation ist, um eine Mindestdickenanforderung für den digitalen Zahnersatzentwurf (303) zu erfüllen;
digitales Modifizieren der digitalen 3D-Darstellung (301), die die mindestens eine Präparation darstellt, durch digitales Schneiden der digitalen 3D-Präparation (301) auf Grundlage der digitalen Schnittfläche, um eine modifizierte digitale 3D-Darstellung der mindestens einen Präparation zu erzeugen, die die Reduktionsfläche (A-A) umfasst; und
digitales Entwerfen sowohl des digitalen Zahnersatzentwurfs (303) als auch des digitalen Reduktionskappenentwurfs (500) auf Grundlage mindestens der Reduktionsfläche (A-A), der digitalen 3D-Präparation (301) und modifizierten digitalen 3D-Darstellung der mindestens einen Präparation, die die Reduktionsfläche (A-A) umfasst, nach nur der einen Patientensitzung.

9. Digitale Entwurfsumgebung zum digitalen Entwerfen eines digitalen Zahnersatzentwurfs (303) und eines digitalen Reduktionskappenentwurfs (500) für eine Präparation, umfassend:
einen digitalen Arbeitsplatz zum Anzeigen einer digitalen 3D-Darstellung des Oberkiefers und des Unterkiefers des Patienten (300), die während einer Patientensitzung erstellt wurde, wobei die digitale 3D-Darstellung eine digitale 3D-Präparation (301) umfasst, die mindestens eine Präparation darstellt, die dafür vorgesehen ist, einen Zahnersatz aufzunehmen,
ein digitales Präparationsschneidwerkzeug zum digitalen Bestimmen einer Reduktionsfläche (A-A), die die digitale 3D-Präparation (301), die die mindestens eine Präparation darstellt, schneidet, wobei die Reduktionsfläche (A-A) eine digitale Schnittfläche zum Schneiden der digitalen 3D-Präparation (301), die die mindestens eine Präparation darstellt, umfasst und die Reduktionsfläche in einem Abstand von einem Zahn angeordnet ist, der Antagonist zu der mindestens einen Präparation ist, um eine Mindestdickenanforderung für den digitalen Zahnersatzentwurf (303) zu erfüllen; und
ein digitales Modifikationswerkzeug zum digitalen Modifizieren der digitalen 3D-Darstellung (301), die die mindestens eine Präparation darstellt, durch digitales Schneiden der digitalen 3D-Präparation (301) auf Grundlage der digitalen Schnittfläche, um eine modifizierte digitale 3D-Darstellung der mindestens einen Präparation zu erzeugen, die die Reduktionsfläche (A-A) umfasst; und
mindestens ein digitales Entwurfswerkzeug zum digitalen Entwerfen sowohl des digitalen Zahnersatzentwurfs (303) als auch des digitalen Reduktionskappenentwurfs (500) auf Grundlage mindestens der Reduktionsfläche (A-A), der digitalen 3D-Präparation (301) und modifizierten digitalen 3D-Darstellung der mindestens einen Präparation, die die Reduktionsfläche (A-A) umfasst, nach nur der einen Patientensitzung.

## Revendications

1. Procédé d'obtention d'une restauration et d'une coiffe de réduction pour une préparation, comprenant
la réception d'une commande d'un utilisateur pour une restauration et une coiffe de réduction,
l'obtention d'un modèle de restauration numérique (303) et d'un modèle de coiffe de réduction numérique (500) pris pendant qu'un patient est assis,
la commande d'un système de fabrication assisté par ordinateur pour fabriquer une restauration sur la base du modèle de restauration numérique (303) et fabriquer une coiffe de réduction sur la base du modèle de coiffe de réduction numérique (500),
l'expédition de la restauration et la coiffe de réduction à l'utilisateur, dans lequel le modèle de restauration numérique (303) et le modèle de coiffe de réduction numérique (500) sont obtenus en commandant un système de conception assistée par ordinateur pour concevoir le modèle de restauration numérique (303) et le modèle de coiffe de réduction numérique (500), dans lequel la commande du système de conception assistée par ordinateur comprend :
l'obtention d'une représentation numérique 3D de la mâchoire supérieure et de la mâchoire inférieure du patient (300) prises pendant qu'un patient est assis, ladite représentation numérique 3D comprend une préparation numérique 3D (301) représentant au moins une préparation ciblée pour recevoir une restauration ;
la détermination numérique d'une surface de réduction (A-A) coupant la préparation numérique 3D (301) représentant la au moins une préparation, ladite surface de réduction (A-A) comprend une surface de découpe numérique pour découper la préparation numérique 3D (301) représentant la au moins une préparation et la surface de réduction est disposée à une certaine distance d'une dent qui est antagoniste à la au moins une préparation afin de répondre à une exigence d'épaisseur minimale pour le modèle de restauration numérique (303) ;
la modification numérique de la représentation numérique 3D (301) représentant la au moins une préparation en découpant numériquement, sur la base de la surface de découpe numérique, la préparation numérique 3D (301) pour créer une représentation numérique 3D modifiée de la au moins une préparation comprenant la surface de réduction (A-A) ; et
la conception numérique à la fois du modèle de restauration numérique (303) et du modèle de coiffe de réduction numérique (500) sur la base au moins de la surface de réduction (A-A), de la préparation numérique 3D (301) et de la représentation numérique 3D modifiée de la au moins une préparation comprenant la surface de réduction (A-A) uniquement une fois le patient assis.

2. Procédé selon la revendication 1, dans lequel la surface de réduction est un plan (A-A).

3. Procédé selon la revendication 2, dans lequel le modèle de coiffe de réduction numérique (500) applique au moins une partie de la surface de réduction (A-A) en tant que surface faisant face à l'antagoniste de la coiffe de réduction (500).

4. Procédé selon la revendication 2 ou 3, dans lequel au moins une partie de la surface faisant face à la préparation du modèle de restauration numérique (303) est conçue sur la base d'un décalage de la surface de réduction (500).

5. Procédé selon l'une quelconque des revendications précédentes, dans lequel le modèle de coiffe de réduction numérique (500) et le modèle de restauration numérique (303) sont conçus au cours d'un même flux de travail de conception.

6. Procédé selon l'une quelconque des revendications précédentes, dans lequel le modèle de restauration numérique (303) est conçu avant que la préparation ne soit davantage réduite sur la base de la coiffe de réduction conçue numériquement comprenant la surface de réduction.

7. Procédé selon la revendication 1, dans lequel la restauration et la coiffe de réduction sont expédiées dans un seul emballage.

8. Procédé de fabrication d'une restauration et d'une coiffe de réduction, dans lequel le procédé comprend les étapes de conception numérique d'un modèle de restauration numérique (303) et d'un modèle de coiffe de réduction numérique (500), et la fabrication du modèle de restauration numérique et du modèle de coiffe de réduction numérique en utilisant une fabrication assistée par ordinateur (FAO), dans lequel la conception numérique du modèle de restauration numérique (303) et du modèle de coiffe de réduction numérique comprend
l'obtention d'une représentation numérique 3D de la mâchoire supérieure et de la mâchoire inférieure du patient (300) prises pendant qu'un patient est assis, ladite représentation numérique 3D comprend une préparation numérique 3D (301) représentant au moins une préparation ciblée pour recevoir une restauration ;
la détermination numérique d'une surface de réduction (A-A) coupant la préparation numérique 3D (301) représentant la au moins une préparation, ladite surface de réduction (A-A) comprend une surface de découpe numérique pour découper la préparation numérique 3D (301) représentant la au moins une préparation et la surface de réduction est disposée à une certaine distance d'une dent qui est antagoniste à la au moins une préparation afin de répondre à une exigence d'épaisseur minimale pour le modèle de restauration numérique (303) ;
la modification numérique de la représentation numérique 3D (301) représentant la au moins une préparation en découpant numériquement, sur la base de la surface de découpe numérique, la préparation numérique 3D (301) pour créer une représentation numérique 3D modifiée de la au moins une préparation comprenant la surface de réduction (A-A) ; et
la conception numérique à la fois du modèle de restauration numérique (303) et du modèle de coiffe de réduction numérique (500) sur la base au moins de la surface de réduction (A-A), de la préparation numérique 3D (301) et de la représentation numérique 3D modifiée de la au moins une préparation comprenant la surface de réduction (A-A) uniquement une fois le patient assis.

9. Environnement de conception numérique pour concevoir numériquement un modèle de restauration numérique (303) et un modèle de coiffe de réduction numérique (500) pour une préparation, comprenant :
un espace de travail numérique pour présenter une représentation numérique 3D de la mâchoire supérieure et de la mâchoire inférieure du patient (300) prises pendant qu'un patient est assis, ladite représentation numérique 3D comprend une préparation numérique 3D (301) représentant au moins une préparation ciblée pour recevoir une restauration ;
un outil de découpe de préparation numérique pour déterminer numériquement une surface de réduction (A-A) coupant la préparation numérique 3D (301) représentant la au moins une préparation, ladite surface de réduction (A-A) comprend une surface de découpe numérique pour découper la préparation numérique 3D (301) représentant la au moins une préparation et la surface de réduction est disposée à une certaine distance d'une dent qui est antagoniste à la au moins une préparation afin de répondre à une exigence d'épaisseur minimale pour le modèle de restauration numérique (303) ; et
un outil de modification numérique pour modifier numériquement la représentation numérique 3D (301) représentant la au moins une préparation en découpant numériquement, sur la base de la surface de découpe numérique, la préparation numérique 3D (301) pour créer une représentation numérique 3D modifiée de la au moins une préparation comprenant la surface de réduction (A-A) ; et
au moins un outil de conception numérique pour concevoir numériquement à la fois le modèle de restauration numérique (303) et le modèle de coiffe de réduction numérique (500) sur la base au moins de la surface de réduction (A-A), de la préparation numérique 3D (301) et de la représentation numérique 3D modifiée de la au moins une préparation comprenant la surface de réduction (A-A) uniquement une fois le patient assis.
